(19) Europäisches Patentamt / European Patent Office / Office européen des brevets

(11) EP 2 927 784 B1

(12) FASCICULE DE BREVET EUROPEEN

(45) Date de publication et mention de la délivrance du brevet:
**05.08.2020 Bulletin 2020/32**

(51) Int Cl.:
*G06F 3/033* (2013.01)     *G06F 3/0362* (2013.01)
*B60K 37/06* (2006.01)     *B64C 13/06* (2006.01)
*B64C 27/56* (2006.01)     *H01H 25/06* (2006.01)

(21) Numéro de dépôt: **15248039.8**

(22) Date de dépôt: **03.04.2015**

(54) **AMÉLIORATION DE L'ERGONOMIE D'UN DISPOSITIF D'ENTRÉE DE DONNÉES**

VERBESSERUNG DER ERGONOMIE EINER DATENEINGABEVORRICHTUNG

IMPROVEMENT OF THE ERGONOMICS OF A DATA INPUT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.04.2014 FR 1400826**

(43) Date de publication de la demande:
**07.10.2015 Bulletin 2015/41**

(73) Titulaire: **THALES**
**92400 Courbevoie (FR)**

(72) Inventeurs:
• **Bigand, Jean-Louis**
**41100 Vendome (FR)**
• **Manceau, Michael**
**28200 Chateaudun (FR)**
• **Hourlier, Sylvain**
**33000 Bordeaux (FR)**

(74) Mandataire: **Collet, Alain et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 905 645          DE-A1-102008 064 021**
**FR-A1- 2 995 103          US-A1- 2005 115 816**
**US-A1- 2006 012 584          US-A1- 2009 066 474**
**US-B1- 6 292 175**

**Description**

L'invention concerne un dispositif d'entrée de données comprenant un désignateur apte à pointer une position sur un écran d'un système informatique auquel le dispositif est connecté.

A ce jour, le désignateur le plus utilisé est une souris dont la position sur une surface plane permet à un opérateur de pointer une position sur un écran du système informatique. De nombreux autres désignateurs sont également mis en œuvre tels que par exemple un pavé tactile (ou touchpad dans la littérature anglosaxonne) fixé à proximité d'un clavier du système, un mini manche (ou joystick), une boule de désignation (ou track ball).

Les désignateurs peuvent être regroupés en deux grandes familles, ceux possédant une partie fixe tels que la surface tactile, le mini manche et la boule de désignation et ceux ne possédant pas de partie fixe comme la souris.

Un désignateur permet de pointer différentes positions sur l'écran. Pour se déplacer entre deux positions, l'opérateur déplace une partie mobile du désignateur ou son doigt dans le cas du pavé tactile. Le déplacement est mesuré dans un repère orthogonal que le système informatique met en correspondance avec un repère de l'écran.

Pour améliorer l'ergonomie des désignateurs, on peut prévoir une surface d'appui, destinée à l'appui de la main de l'opérateur lorsqu'il manœuvre le désignateur. Cette surface permet de limiter les tensions dans le poignet de l'opérateur. Pour une souris, la surface d'appui est directement formée par la forme de la souris sur laquelle l'opérateur pose la paume de la main. Pour la famille des désignateurs possédant une partie fixe, on peut prévoir un repose paume faisant partie intégrante de la partie fixe du désignateur. Le repose paume possède une forme, par exemple en portion de sphère, ce qui permet d'épouser la surface intérieure de la paume de la main.

On peut associer au désignateur plusieurs boutons permettant des saisies de données comme par exemple un bouton poussoir permettant par exemple la validation d'une valeur pointée par le désignateur. Pour la famille des désignateurs possédant une partie fixe, ce type de bouton poussoir est généralement situé sur un coté du repose paume. La manœuvre de ce bouton se fait au moyen du pouce de l'opérateur. Ce type de désignateur avec un repose paume, un désignateur (de type trackball ou joystick), un bouton rotatif de sélection, et au moins un bouton poussoir est par exemple décrit dans les documents: EP 0 905 645 A1, FR 2 995 103 A1, US 2009/066474 A1, US 292 175 B1.

A proximité du désignateur, on peut trouver des boutons rotatifs à double bague permettant notamment un réglage grossier de la valeur d'une donnée pour l'une des bagues et un réglage fin de la même valeur pour l'autre bague. Les documents US 2005/115816 A1, DE 10 2008 064021 A1 et US 2006/012584 A1 décrivent des exemples de dispositifs des boutons "multifonctions" permettant l'entrée de données au moyen de multiples sélections en rotation, pression et/ou basculement. Pour valider la valeur retenue, on peut utiliser le bouton de validation du désignateur. La distance séparant le bouton rotatif du bouton de validation impose à l'opérateur de déplacer sa main entre une position de sélection de la valeur sur le bouton rotatif et une position de validation sur le côté du repose paume. Plus précisément, le bouton rotatif est généralement manœuvré entre le pouce et l'index. Le pouce doit être déplacé pour atteindre le bouton de validation.

De façon plus générale, les systèmes informatiques récents demandent un grand nombre d'accès pour sélectionner et valider diverses données. Ces accès nécessitent de nombreuses manœuvres de la part de l'opérateur. Ces manœuvres nécessitent des déplacements de sa main pour passer d'un moyen d'entrée de donnée à un autre. Ces déplacements sont ergonomiquement délicats. Tout d'abord, le fait de déplacer la main d'un bouton à un autre est source d'erreur. En suite les déplacements nécessitent un apprentissage important et même si l'opérateur les effectue rapidement, un temps de passage minimum d'un bouton à un autre est nécessaire.

L'invention vise à améliorer l'ergonomie d'un dispositif d'entrée de données possédant des actionneurs multiples.

A cet effet, l'invention a pour objet un dispositif d'entrée de données selon l'une des revendications..

L'invention sera mieux comprise et d'autres avantages apparaîtront à la lecture de la description détaillée d'un mode de réalisation donné à titre d'exemple, description illustrée par le dessin joint dans lequel :

la figure 1 représente un dispositif d'entrée de données conforme à l'invention :

la figure 2 représente le dispositif de la figure 1 manœuvré par la main d'un opérateur ;

la figure 3 représente une partie du dispositif permettant de visualiser un repose paume et un bouton configuré pour permettre deux ou trois saisies différentes ;

la figure 4a et 4b représentent le bouton permettant les deux ou trois saisies ;

les figures 5a, 5b et 5c représentent le bouton manœuvré par la main de l'opérateur ;

les figures 6a, 6b, 6c et 6d représentent une variante du bouton manœuvrée par la main de l'opérateur ;

la figure 7 représente un poste de travail dans lequel est installé un dispositif d'entrée de données ambidextre conforme à l'invention :

la figure 8 représente la main d'un opérateur manipulant le dispositif visible sur la figure 7 ;

les figures 9 et 10 représentent deux variantes du dispositif d'entrée de données.

Par souci de clarté, les mêmes éléments porteront les mêmes repères dans les différentes figures.

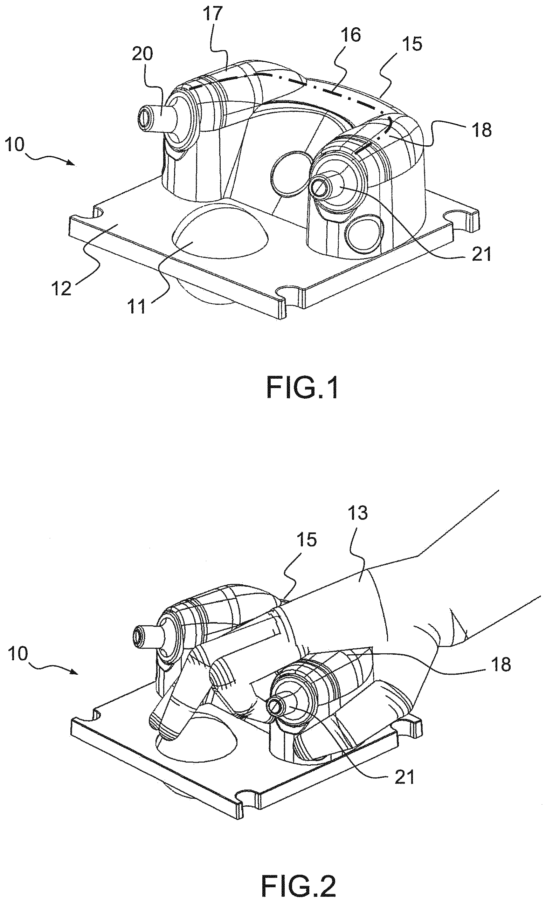

La figure 1 représente un dispositif d'entrée de données 10 comprenant un désignateur tel qu'une boule de désignation formée d'une sphère 11 pouvant tourner sur elle-même par rapport à un corps fixe. La boule de désignation comprend un ensemble de capteurs délivrant une information de position relative de la sphère 11 par rapport au corps. L'information peut être codée par un calculateur. L'ensemble de capteur et éventuellement le calculateur sont disposés à l'intérieur du corps fixe. L'information codée est par exemple destinée à être utilisée pour désigner un objet sur l'écran d'un système informatique.

Dans l'exemple représenté, le corps fixe comprend une plaque 12 carrée ou rectangulaire destinée à être fixée sur la planche de bord d'un aéronef. Il est bien entendu que l'invention n'est pas limitée à une utilisation dans un poste de pilotage d'un aéronef. Elle peut être mise en œuvre dans tout autre domaine où le corps du dispositif d'entrée de données est fixé sur un poste de travail. Le corps fixe peut également comprendre un boitier situé sous la plaque 12, non représenté sur la figure 1 et contenant le calculateur et l'ensemble de capteurs.

La figure 2 représente le dispositif d'entrée de données 10 manœuvré par la main 13 d'un opérateur. Le dispositif d'entrée de données 10 comprend un repose paume 15 sur lequel un opérateur peut appuyer la paume de sa main lorsqu'il utilise le dispositif 10. Le repose paume 15 est solidaire du corps fixe. Le repose paume 15 est proéminent par rapport à la plaque 12. Le repose paume s'étend principalement selon un arc 16 se refermant vers une zone destinée à recevoir les doigts de la main 13 de l'opérateur manœuvrant le désignateur, en l'occurrence la sphère 11. Dans l'exemple représenté, le repose paume 15 est ambidextre. Il peut être utilisé par la main droite ou la main gauche d'un opérateur. A cet effet, deux zones d'appui 17 et 18 sont prévues sur la surface du repose paume 15. La zone d'appui 17 est essentiellement prévue pour recevoir une main gauche et la zone d'appui 18 pour recevoir une main droite. L'invention peut bien entendue être mises en œuvre pour un dispositif d'entrée de données ne possédant qu'une seule zone d'appui.

En complément du désignateur, le dispositif comprend au moins un bouton 20 disposé de façon à être manœuvré par les doigts de l'opérateur, sa main restant en appui sur la zone d'appui. L'arc 16 possède deux extrémités, et le bouton 20 est disposé à l'une des extrémités de l'arc 16. Dans le cas d'un dispositif ambidextre, le dispositif comprend deux boutons identiques 20 et 21, le bouton 20 étant associé à la zone d'appui 17 et le bouton 21 à la zone d'appui 18. Les deux boutons 20 et 21 sont chacun disposé à l'une des extrémités de l'arc 16.

Sans changer d'appui sur le repose paume, la main 13 de l'opérateur peut manipuler le désignateur et le bouton associé à la zone d'appui considérée. Sur la figure 2, le bouton est manipulé entre le pouce et l'index de la main 13. Durant cette manipulation l'opérateur peut toujours faire tourner la sphère 11. Sur la figure 2, on distingue le majeur de la main 13 posé sur la surface de la sphère 11 et permettant de la faire tourner.

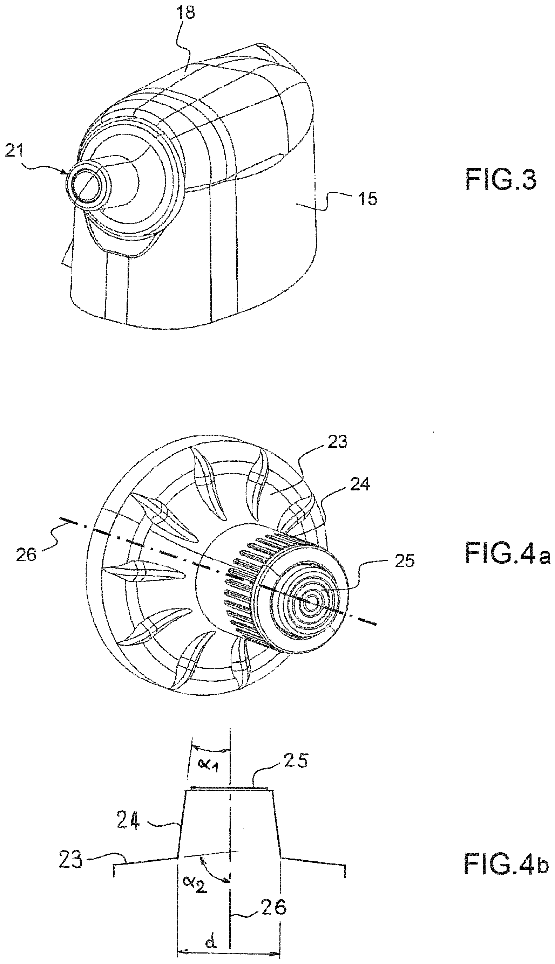

La figure 3 représente une partie du repose paume 15 associée au bouton 21 et les figures 4a et 4b représentent plus en détail le bouton 21. Le bouton 21 est configuré pour permettre au moins deux sélections distinctes de données dont un choix de valeurs dans une série et une saisie binaire en relation avec la valeur choisie. Le choix de valeur peut être proportionnel ou réalisé dans une série discrète de valeurs.

Dans un mode de réalisation particulier, le bouton 21 est configuré pour permettre deux choix de valeurs, chacun dans une série, et la saisie binaire 25 en relation avec l'une des valeurs choisies. Dans ce mode particulier, le bouton 21 comprend deux bagues concentriques 23 et 24 sur lesquelles l'opérateur peut poser les doigts. Les bagues sont configurées chacune pour la sélection parmi un choix de valeur et un interrupteur poussoir 25 configuré pour la saisie binaire. Les bagues 23 et 24 peuvent tourner toutes deux indépendamment l'une de l'autre autour d'un même axe 26. Les bagues 23 et 24 sont avantageusement moletées ou crantées pour permettre une meilleure manipulation entre les doigts de l'opérateur. Chacune des bagues 23 et 24 entraine un commutateur rotatif permettant une sélection. Le commutateur peut comprendre plusieurs positions discrètes réparties autour de l'axe 26. Alternativement, la bague considérée peut entrainer le curseur d'un potentiomètre permettant la sélection d'une valeur de façon linéaire dans un domaine continu.

La bague 23 peut avoir la forme d'une rondelle sensiblement plate dont le plan est perpendiculaire à l'axe 26. D'autres formes sont bien entendu possibles, comme par exemple un tronc de cône d'axe 26 et d'angle au sommet $\alpha_2$ ou même une portion de cylindre. Dans le cas d'une rondelle plate, on considère que l'angle au sommet $\alpha_2$ est égal à 90°. Dans l'exemple représenté, la bague 24 a une forme cylindrique ou légèrement conique d'angle au sommet $\alpha_1$ dont le plus grand diamètre est inférieur ou égal au plus petit diamètre de la bague 23. Dans le cas d'une forme cylindrique, on considère que l'angle au sommet $\alpha_2$ est égal à 0°. L'angle $\alpha_2$ est avantageusement supérieur à l'angle $\alpha_1$ afin de faciliter la manœuvre du bouton par un opérateur. Dans l'exemple représenté, le plus petit diamètre d de la bague 23 coïncide avec le plus grand diamètre de la bague 24. Les angles au sommet vérifient la relation :

$$0° \leq \alpha_1 < \alpha_2 \leq 90°.$$

Dans le mode de réalisation représenté, l'interrupteur 25 est disposé au centre de la bague 24. Il est configuré pour être manœuvré en translation selon l'axe 26. L'interrupteur 25 possède une surface d'appui circulaire disposée au centre de la bague 24.

Le bouton 21 peut être associé au choix et la validation d'une seule valeur, Plus précisément la bague 23 peut permettre un réglage grossier ou défilement rapide de valeurs possibles. La bague 24 peut permettre un réglage fin ou un défilement lent autour de la valeur choisie avec la bague 23. Enfin, l'interrupteur peut permettre la validation de la valeur une fois les deux réglages, grossier et fin, exécutés.

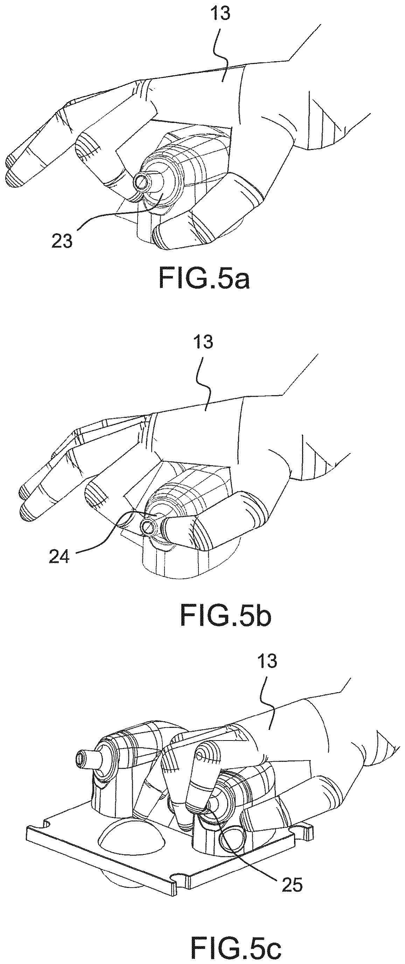

Les figures 5a, 5b et 5c représentent le bouton 21 manœuvré par la main 13 de l'opérateur. Sur la figure 5a, la main 13 manipule la bague 23 de l'extrémité de l'index. Sur la figure 5b, la main 13 manipule la bague 24 entre le pouce et l'index. Sur la figure 5c, la main 13 manipule l'interrupteur 25 avec l'index. Dans cette disposition des bagues 23, 24 et de l'interrupteur 25, un même doigt, l'index en l'occurrence, peut réaliser successivement les trois manipulations sans se décoller du bouton 21.

Dans le cas où le bouton 21 ne permet qu'un seul choix de valeur dans une série, on peut conserver les deux bagues 23 et 24 qui sont alors solidaires l'une de l'autre et tournent simultanément. On peut appeler cet ensemble solidaire : bague qui possède deux zones 23 et 24. L'opérateur peut utiliser la zone 23 pour faire tourner rapidement la bague (figure 5a). Cela permet un choix grossier dans la série de valeurs. Une fois une valeur approchée obtenue, l'opérateur peut faire tourner la bague en utilisant la zone 24 (figure 5b) pour affiner son choix autour de la valeur obtenue au moyen du mouvement de la zone 23. Les deux zones de la bague ont avantageusement des formes voisines de celles représentées sur la figure 4b. Les zones 23 et 24 ont une forme tronconique s'étendant autour de l'axe 26. L'angle au sommet $\alpha_2$ de la zone de la zone 23 est compris entre $\alpha_1$ et 90°. L'angle au sommet $\alpha_1$ de la zone de la zone 24 est compris entre 0° et $\alpha_2$. Cette configuration des deux zones permet à l'opérateur de tourner rapidement la bague en posant un doigt, par exemple l'index, sur la zone 23 et plus lentement avec plus de précision la bague en la pressant entre deux doigts, par exemple le pouce et l'index, posés sur la zone 24.

En complément de ces trois actionneurs, le bouton 21 peut être configuré pour permettre une entrée de donnée supplémentaire au moyen d'un déplacement du bouton en rotation selon un axe perpendiculaire à l'axe 26. Autrement dit, le bouton possède une fonction mini manche ou interrupteur à bascule souvent appelé rocker. La fonction mini manche permet la sélection d'une donnée de façon linéaire dans un domaine donné et la fonction interrupteur permet la sélection d'une donnée binaire. Le bouton 21 peut être configuré pour pivoter selon un ou deux axes perpendiculaire(s) à l'axe 26. Ces deux axes de pivotement sont perpendiculaires entre eux. Ils sont situés dans un plan positionné à la base de la bague 23.

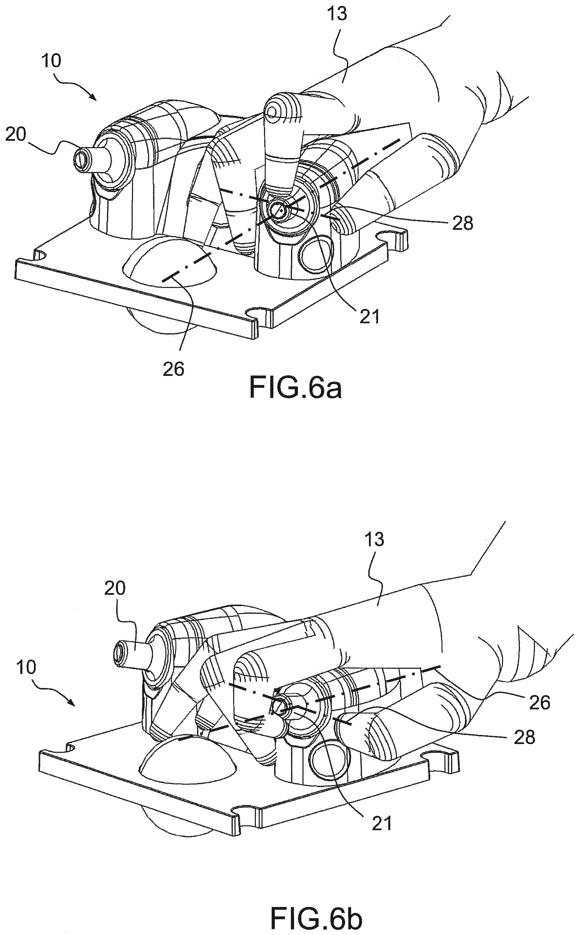

Les figures 6a et 6b représentent la main 13 de l'opérateur manipulant le bouton 21 en rotation autour d'un premier axe 28 perpendiculaire à l'axe 26. Sur la figure 6a, l'opérateur pousse de l'index le bouton 21 vers la plaque 12 ou conventionnellement vers le bas. Sur la figure 6b, l'opérateur tire de l'index le bouton 21 vers le haut.

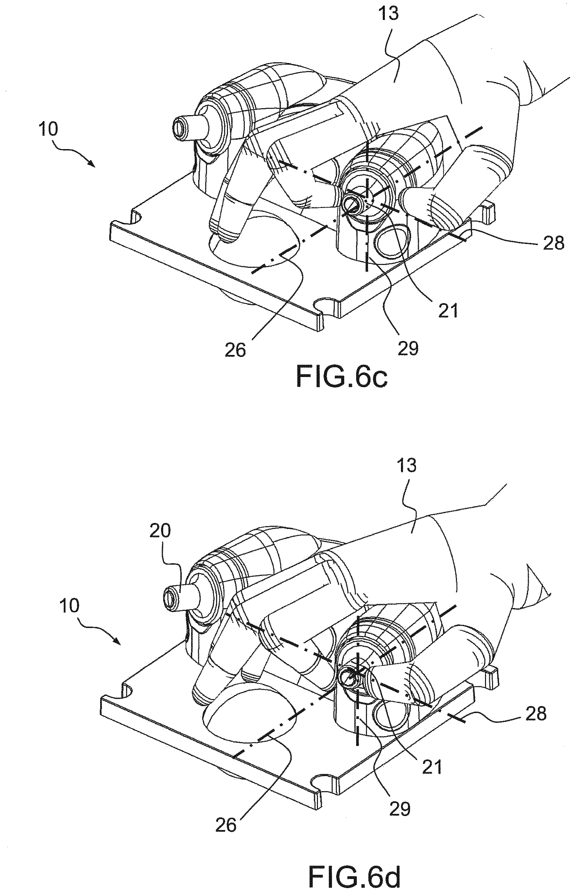

Les figures 6c et 6d représentent la main 13 de l'opérateur manipulant le bouton 21 en rotation autour d'un second axe 29 perpendiculaire à l'axe 26 et à l'axe 28. Sur la figure 6c, l'opérateur pousse de l'index le bouton 21 vers la gauche. Sur la figure 6b, l'opérateur pousse du pouce le bouton 21 vers la droite.

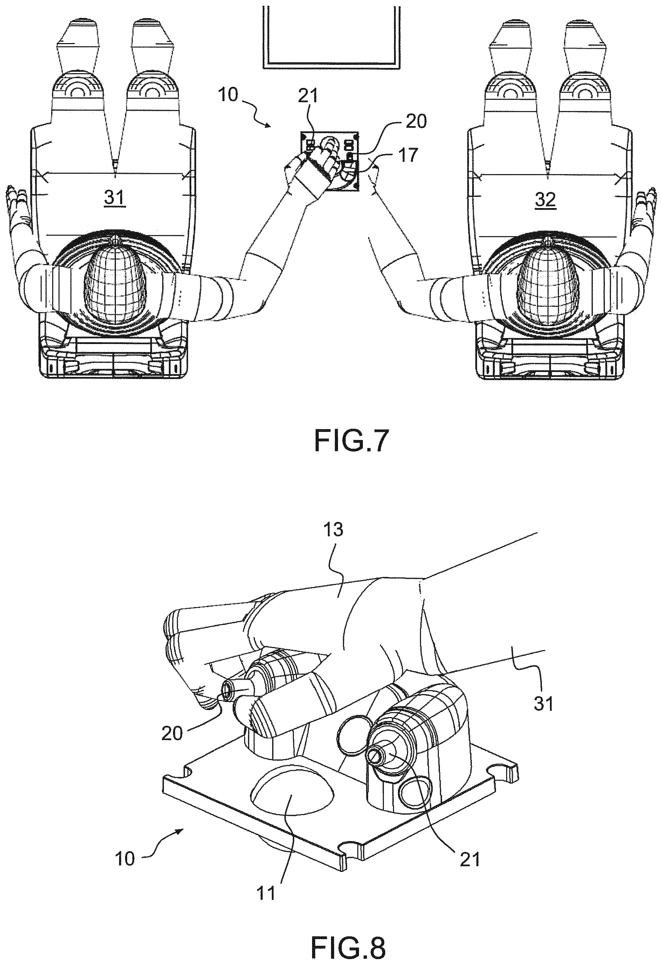

La figure 7 représente un poste de travail dans lequel deux opérateurs 31 et 32 sont susceptibles d'utiliser alternativement le même dispositif d'entrée de données 10. Ce poste de travail est par exemple le poste de pilotage d'un aéronef et les deux opérateurs 31 et 32 sont le pilote et le copilote de l'aéronef. Le dispositif d'entrée de données 10 est placé entre le pilote 31 et le copilote 32. Le dispositif d'entrée de données 10 est ambidextre. Il peut être utilisé soit par le pilote 31 soit par le copilote 32. En position standard de la main de chacun des opérateurs, le pilote 31, en appui sur la zone 18 cachée sur la figure 7, manipule le bouton 21 et le copilote 32, en appui sur la zone 16, manipule le bouton 20. Tous deux peuvent voir accès à la sphère 11 du désignateur.

Il est bien entendu possible au pilote d'avoir accès au bouton 20, comme représenté sur la figure 8 et inversement au copilote 31 d'avoir accès au bouton 21.

Autrement dit, les deux boutons 20 et 21 sont destinés à être manœuvré soit par un même opérateur soit par deux opérateurs disposés différemment par rapport à la sphère 11.

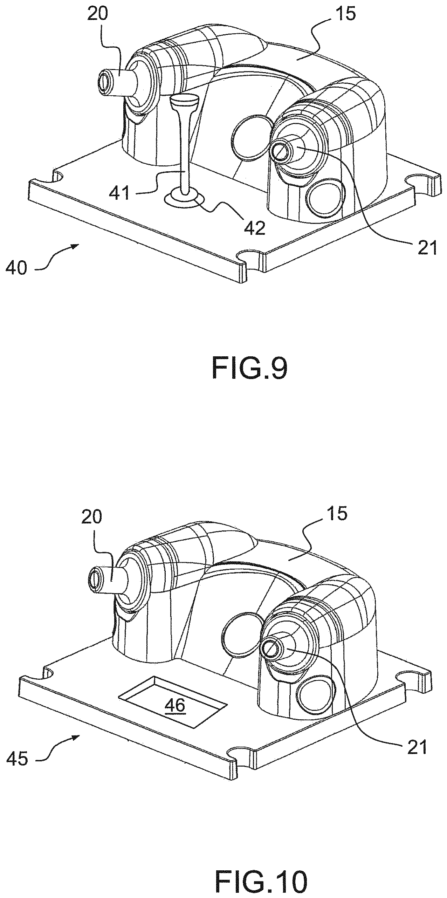

La figure 9 représente un dispositif d'entrée de données 40 dans lequel le désignateur comprend un mini manche 41 relié à la plaque 14 à l'une de ses extrémités 42 par une liaison à deux degrés de libertés en rotation. Les mouvements du mini manche 41 permettent à l'opérateur de désigner un objet sur un écran du système informatique auquel est relié le mini manche 41. On retrouve le repose paume 15 et ses deux boutons 20 et 21.

La figure 10 représente un dispositif d'entrée de données 45 dans lequel le désignateur comprend une surface tactile 46 disposée dans le plan que la plaque 14 ou légèrement abaissée afin d'en distinguer tactilement les contours. Un opérateur déplace un doigt sur la surface tactile 46 pour désigner un objet. On retrouve également le repose paume 15 et ses deux boutons 20 et 21.

**Revendications**

1. Dispositif d'entrée de données (10 ; 40 ; 45) comprenant un désignateur (11 ; 41 ; 46) apte à pointer une position sur un écran d'un système informatique auquel le dispositif est destiné à être raccordé et un corps (12) destiné à être fixé sur un poste de travail, le corps (12) comprenant une zone d'appui (17, 18) destinée à l'appui de la main d'un ou deux opérateurs (13) lorsqu'il(s) manœuvre(nt) le désignateur (11 ; 41 ; 46), un repose paume (15) sur lequel est prévue la zone d'appui (17, 18), le repose paume (15) s'étendant principalement selon un arc (16) possèdant deux extrémités et se refermant vers une zone destinée à recevoir les doigts de la main de l'opérateur manœuvrant le désignateur (11 ; 41 ; 46) deux boutons (20, 21), chacun disposé à l'une des extrémités de l'arc (16) et disposé de façon à être manœuvré par les doigts d'un opérateur, soit par un même opérateur soit par deux opérateurs (31, 32) disposés différemment par rapport au désignateur (11 ; 41 ; 46), la main (13) de l'opérateur ou des opérateurs restant en appui sur la zone d'appui (17,18), les boutons (20, 21) étant configurés chacun pour permettre au moins deux sélections (23, 24, 25) distinctes de données dont un choix de valeurs dans une série et une saisie binaire (25) en relation avec la valeur choisie, chacun des boutons (20, 21) comprenant une bague tournante autour d'un axe (26) et permettant le choix de valeurs dans une série, la bague possédant une première zone (23) et une seconde zone (24) solidaires l'une de l'autre et ayant toutes deux une forme sensiblement tronconique s'étendant autour de l'axe (26) sur lesquelles l'opérateur peut poser les doigts, un plus petit diamètre (d) de la première zone (23) autour de l'axe (26) étant supérieur ou égal à un plus grand diamètre (d) de la seconde zone (24) autour de l'axe (26), en définissant un angle au sommet $\alpha_2$ de la première zone (23) et un angle au sommet $\alpha_1$ de la seconde zone (24), les angles au sommet vérifient la relation :

$$0° \leq \alpha_1 < \alpha_2 \leq 90°.$$

2. Dispositif selon la revendication 1, dans lequel chacun des boutons (20, 21) comprend un interrupteur poussoir (25) configuré pour la saisie binaire.

3. Dispositif selon la revendication 2, dans lequel l'interrupteur (25) est disposé au centre de la bague (23, 24) et dans lequel l'interrupteur (25) est configuré pour être manœuvré en translation selon l'axe (26) de la bague (23, 24).

4. Dispositif selon l'une des revendications précédentes, dans lequel chacun des boutons (20, 21) est configuré pour permettre une première entrée de donnée supplémentaire au moyen d'un déplacement du bouton en rotation selon un premier axe (28) perpendiculaire à l'axe (26) de rotation de la bague (23, 24).

5. Dispositif selon la revendication 4, dans lequel chacun des boutons (20, 21) est configuré pour permettre une seconde entrée de donnée supplémentaire au moyen d'un déplacement du bouton (20, 21) en rotation selon un second axe (29) perpendiculaire à l'axe (26) de rotation de la bague (23, 24) et perpendiculaire au premier axe (28).

6. Dispositif selon l'une des revendications 4 ou 5, dans lequel l'entrée ou les entrées de données supplémentaires permettent une saisie d'un choix de valeur dans une série donnée.

7. Dispositif selon l'une des revendications 4 ou 5, dans lequel l'entrée ou les entrées de données supplémentaires permettent d'accéder à des données binaires.

**Patentansprüche**

1. Dateneingabevorrichtung (10; 40; 45), beinhaltend einen Bezeichner (11; 41; 46), welcher in der Lage ist, auf eine Position auf einem Bildschirm eines EDV-Systems zu zeigen, an welches die Vorrichtung angeschlossen zu werden bestimmt ist, und einen Körper (12), welcher dazu bestimmt ist, an einem Arbeitsplatz befestigt zu werden, wobei der Körper (12) einen Auflagebereich (17, 18) beinhaltet, welcher zur Auflage der Hand eines oder zweier Bediener (13) bestimmt ist, wenn er/sie den Bezeichner (11; 41; 46) bedienen, eine Handballenauflage (15), auf welcher der Auflagebereich (17, 18) vorgesehen ist, wobei die Handballenauflage (15) sich hauptsächlich in einem Bogen (16) erstreckt, welcher zwei Enden aufweist und sich in Richtung eines Bereichs schließt, welcher dazu bestimmt ist, die Finger der Hand des den Bezeichner (11; 41; 46) bedienenden Bedieners aufzunehmen, zwei Knöpfe (20, 21), jeweils an einem der Enden des Bogens (16) und dergestalt angeordnet, dass sie durch die Finger eines Bedieners bedient werden können, entweder durch einen einzigen oder durch zwei Bediener (31, 32), unterschiedlich in Bezug auf den Bezeichner (11; 41; 46) positioniert, wobei die Hand (13) des Bedieners oder der Bediener auf dem Auflagebereich (17,18) aufgelegt bleibt, wobei die Knöpfe (20, 21) jeweils konfiguriert sind, um mindestens zwei unterschiedliche Auswahlen (23, 24, 25) von Daten zu ermöglichen, darunter eine Auswahl von Werten aus einer Reihe und eine binäre Eingabe (25) in Verbindung mit dem gewählten Wert, wobei jeder der Knöpfe (20, 21) einen um eine Achse (26) drehbaren Ring beinhaltet und die Auswahl von Werten aus einer Reihe ermöglicht, wobei der Ring einen ersten Bereich (23) und einen zweiten Bereich (24) aufweist, welche fest miteinander verbunden sind und beide eine im Wesentlichen kegelstumpfartigen Form aufweisen, welche sich um die Achse (26) erstreckt, auf welche der Bediener seine Finger legen kann, wobei ein kleinerer Durchmesser (d) des ersten Bereichs (23) um die Achse (26) größer als ein oder gleich einem größeren Durchmesser (d) des zweiten Bereichs (24) um die Achse (26) ist, indem er einen Winkel an der Spitze α2 das ersten Bereichs (23) und einen Winkel an der Spitze α1 des zweiten Bereichs definiert (24), wobei die Winkel an der Spitze folgende Beziehung bewahrheiten:

$$0°\leq \alpha1 < \alpha2 \leq 90°.$$

2. Vorrichtung nach Anspruch 1, bei welcher jeder der Knöpfe (20, 21) einen Druckschalter (25) beinhaltet, welcher für die binäre Eingabe konfiguriert ist.

3. Vorrichtung nach Anspruch 2, bei welcher der Schalter (25) im Mittelpunkt des Rings (23, 24) angeordnet ist und bei welcher der Schalter (25) zur verschiebbaren Bedienung entlang der Achse (26) des Rings (23, 24) konfiguriert ist.

4. Vorrichtung nach einem der vorhergehenden Ansprüche, bei welcher jeder der Knöpfe (20, 21) konfiguriert ist, um eine erste zusätzliche Dateneingabe mithilfe einer Drehverschiebung des Knopfs entlang einer ersten Achse (28) rechtwinklig zur Drehachse (26) des Rings (23, 24) zu ermöglichen.

5. Vorrichtung nach Anspruch 4, bei welcher jeder der Knöpfe (20, 21) konfiguriert ist, um eine zweite zusätzliche Dateneingabe mithilfe einer Drehverschiebung des Knopfs (20, 21) entlang einer zweiten Achse (29) rechtwinklig zur Drehachse (26) des Rings (23, 24) und rechtwinklig zur ersten Achse (28) zu ermöglichen.

6. Vorrichtung nach einem der Ansprüche 4 oder 5, bei welchem die zusätzliche(n) Dateneingabe(n) eine Eingabe einer Wahl eines Wertes aus einer gegebenen Reihe ermöglicht/ermöglichen.

7. Vorrichtung nach einem der Ansprüche 4 oder 5, bei welchem die zusätzliche(n) Dateneingabe(n) den Zugriff auf binäre Daten ermöglicht/ermöglichen.

**Claims**

1. Data input device (10; 40; 45) comprising a designator (11; 41; 46) able to point to a position on a screen of a computer system, to which the device is intended to be connected, and a body (12) intended to be fixed on a workstation, the body (12) comprising a support zone (17, 18) intended to support the hand of one or two operators (13) as he/they manipulate(s) the designator (11; 41; 46), a palm rest (15) on which the support zone (17, 18) is provided, the palm rest (15) extending mainly according to an arc (16) having two ends and closing up towards a zone intended to receive the fingers of the operator's hand manipulating the designator (11; 41; 46), two buttons (20, 21), each disposed at one end of the arc (16) and disposed so as to be operated by the fingers of an operator, either by the same operator or by two operators (31, 32) positioned differently in relation to the designator (11; 41; 46), the hand (13) of the operator or operators remaining in contact with the support zone (17, 18), the buttons (20, 21) being each configured to allow at least two distinct selections (23, 24, 25) of data including a choice of values in a series and a binary acquisition (25) in relation to the chosen value, each of the knobs (20, 21) comprising a rotary ring rotating about an axis (26) and allowing the choice of values in a series, the ring having a first zone (23) and a second zone (24) which are joined together and both having a substantially frustoconical shape extending around the axis (26), on which zones the operator can place his fingers, a smaller diameter (d) of the first zone (23) about the axis (26) being greater than or equal to a larger diameter (d) of the second zone (24) about the axis (26), by defining a vertex angle α2 of the first zone (23) and a vertex angle α1 of the second zone (24), the vertex angles satisfying the relationship:

$$0° \leq \alpha_1 < \alpha_2 \leq 90°.$$

2. Device according to claim 1, in which each the knob (20; 21) comprises a pushbutton switch (25) configured for the binary acquisition.

3. Device according to claim 2, in which the switch (25) is arranged at the center of the ring (23; 24) and the switch (25) is configured to be manipulated in a translational movement along the axis (26) of the ring (23; 24).

4. Device according to any of the preceding claims, in which each knob (20; 21) is configured to allow an additional first data input by means of a rotation of the knob about a first axis (28) perpendicular to the axis (26) of rotation of the ring (23; 24).

5. Device according to claim 4, in which each knob (20; 21) is configured to allow a second additional data input by means of a rotation of the knob (20; 21) about a second axis (29) perpendicular to the axis (26) of rotation of the ring (23; 24) and perpendicular to the first axis (28).

6. Device according to any of claims 4 or 5, in which the additional data input or inputs allow acquisition of a choice of value in a given series.

7. Device according to any of claims 4 or 5, in which the additional data input or inputs allow access to binary data.

FIG.1

FIG.2

FIG.3

FIG.4a

FIG.4b

13

23

FIG.5a

13

24

FIG.5b

13

25

FIG.5c

FIG.6a

FIG.6b

FIG.6c

FIG.6d

FIG.7

FIG.8

FIG.9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0905645 A1
- FR 2995103 A1
- US 2009066474 A1
- US 292175 B1
- US 2005115816 A1
- DE 102008064021 A1
- US 2006012584 A1